# EUROPEAN PATENT SPECIFICATION

(11) **EP 4 238 859 B1**
(45) Date of publication and mention of the grant of the patent: **10.12.2025**
(21) Application number: 23158924.3
(22) Date of filing: 28.02.2023
(51) Int. Cl.: B62K 19/30, B62H 1/02

(54) **DEVICE FOR FIXING A CYCLE STAY TO A LOW CHAINSTAY OF A BICYCLE**
VORRICHTUNG ZUR BEFESTIGUNG EINES FAHRRADSTÄNDERS AN EINER FAHRRADKETTENSTREBE
DISPOSITIF DE FIXATION D'UNE BÉQUILLE DE BICYCLETTE À UNE BASE DE BICYCLETTE

(30) Priority: 01.03.2022 IT 202200003767
(43) Date of publication of application: 06.09.2023
(73) Proprietor: Ursus S.P.A., 36027 Rosà (VI) (IT)
(72) Inventor: FERRONATO, Sergio, 36027 Rosà (VI) (IT)
(74) Representative: Marchioro, Paolo

(56) References cited:
- EP-A1- 3 922 538
- CN-U- 212 921 763
- CN-U- 213 384 521
- IT-A1- 202000 005 170

## Description

The invention concerns a device for fixing a cycle stay to a low chainstay of a bicycle.

Nowadays a cycle stay is generally made up of:
- a fixing bracket, configured to be fixed to a central or rear portion of the frame of a bicycle;
- a rest rod articulated to the fixing bracket.

A cycle stay can therefore be:
- of central type: fixed under the frame in a portion between the two wheels, to the low chainstays of the frame, near the seat of the central movement;
- of the rear type: fixed to a low chainstay of the frame, usually near or at the rear wheel.

The term "rear" means on the opposite side to the normal forward direction of a bicycle.

The expression "low chainstays" indicates the two tubular elements of the frame, substantially horizontal, between which the rear wheel of the bicycle is interposed, whereas "high chainstays" indicates the two corresponding tubular elements of the frame, substantially oblique, between which the rear wheel is interposed, and which develop between the seat tube and the low chainstays.

Each low chainstay is joined to the respective high chainstay by a corresponding "rear fork", normally welded to the converging ends of a low chainstay and the corresponding high chainstay.

Nowadays the fixing of a cycle stay to the low chainstay of a bicycle is done by fixing the fixing bracket of the cycle stay either to the rear end section of the low chainstay, or to the rear fork.

The fixing bracket is generally fixed directly to the low chainstay by means of threaded connections.

The low chainstay generally consist of a tubular body made of a metallic material whose main peculiarity is the light-weight, therefore the connection of the fixing bracket to the low chainstay by means of threaded connections can be little robust and prone to undergo deformations following particularly intense stresses.

To overcome this drawback, solutions are known today that envisages mounting on the low chainstay an auxiliary body by means of threaded connections to which auxiliary body the fixing bracket of the cycle stay is then attached by means of further threaded connections.

These solutions, although known and widespread, have a limit linked to the fact that the threaded elements that connect the fixing bracket of the cycle stay to the low chainstay, or to the rear fork, enter at least in part inside the low chainstay, or the rear fork.

Since the low chainstay, or the rear fork, are substantially tubular bodies, and therefore internally hollow, and welded at the ends to the rest of the frame of the bicycle, if the shank of the threaded element breaks, as a result of the stresses to which the frame is subjected, a part thereof remains trapped inside the low chainstay or the rear fork, with no more possibility of being removed, unless a heavy separation intervention of the same low chainstay, or rear fork, is made from the same frame. Known device for fixing a cycle stay to a frame of a bicycle are known from IT 2020 0000 5170 A1, EP 3 922 538 A1, CN 213 384 521 U or CN 212 921 763 U.

The task of the present invention is to develop a device for fixing a cycle stay to a low chainstay of a bicycle, capable of obviating the aforementioned drawbacks and limitations of the prior art.

In particular, an object of the invention is to develop a device capable of preventing a portion of a broken screw from remaining inside the low chainstay, or the rear fork, to which the cycle stay is fixed.

A further object of the invention is to develop a device that in case of breakage of a fixing screw makes it possible to easily and quickly replace it.

Another object of the invention is to develop a device that allows to set up a cycle stay in a less dangerous position for a user.

Still, an object of the invention is to develop a device for fixing a cycle stay to a low chainstay of a bicycle that has a better aesthetic impact than what is known.

The aforementioned task and objects are achieved by a device for fixing a cycle stay to a low chainstay of a bicycle according to claim 1.

Further characteristics of the device according to claim 1 are described in the dependent claims.

The task and the aforementioned objects, together with the advantages that will be mentioned below, are highlighted by the description of seven embodiments of the invention, which are given, by way of indication but not limitation, with reference to the attached drawing tables, where:
- Figure 1 represents a perspective view of a device according to the invention in a first embodiment thereof;
- Figure 2 represents a cross-section of the device of Figure 1;
- Figure 3 represents a front view of the device of Figures 1 and 2;
- Figure 4 represents a longitudinal section of the device of Figure 1 according to section line IV-IV of Figure 3;
- Figure 5 represents a perspective view of a device according to the invention in a second embodiment thereof;
- Figure 6 represents a cross-section of the device of Figure 5;
- Figure 7 represents a longitudinal section of the device of Figures 5 and 6;
- Figure 8 represents a perspective view of a device according to the invention in a third embodiment thereof;
- Figure 9 represents a cross-section of the device of Figure 8;
- Figure 10 represents another perspective view of the device according to the invention in the third embodiment thereof;
- Figure 11 represents a longitudinal section of the device of Figures 8 to 10;
- Figure 12 represents a perspective view of a device according to the invention in a fourth embodiment thereof;
- Figure 13 represents a longitudinal section of the device of Figure 12;
- Figure 14 represents a cross-section of the device of Figures 12 and 13;
- Figure 15 represents a perspective view of a device according to the invention in a fifth embodiment thereof;
- Figure 16 represents a cross-section of the device of Figure 15;
- Figure 17 represents a longitudinal section of the device of Figure 15;
- Figure 18 represents a perspective view of a device according to the invention in a sixth embodiment thereof;
- Figure 19 represents a longitudinal section of the device of Figure 18;
- Figure 20 represents a cross-section of the device of Figure 18;
- Figure 21 represents a perspective view of a device according to the invention in a seventh embodiment thereof;
- Figure 22 represents a front view of the device of Figure 21;
- Figure 23 represents a side view of the device of Figure 21;
- Figure 24 represents a cross-section of the device of Figure 21.

With reference to the cited figures, a device for fixing a cycle stay to a low chainstay of a bicycle according to the invention is indicated, as a whole of a first embodiment, with the number **10.**

Said device **10** for fixing a cycle stay to a frame of a bicycle comprises:
- a cycle stay **11** comprising a fixing bracket **12** and a rest rod **13,** said rest rod **13** being pivoted to said fixing bracket **12;**
- a box of the central movement **14** of a bicycle;
- a rear fork **15;**
- a low chainstay **16** interposed between the box of the central movement **14** and the rear fork **15,** which low chainstay **16** has a longitudinal development axis **X.**

The peculiarity of the invention lies in the fact that the low chainstay **16** comprises a fixing body **17** fixed externally to the low chainstay **16,** like in the figures.

In an embodiment variant of the invention, the fixing body **17** is fixed externally to said rear fork **15.**

Said fixing body **17** comprises at least one fixing threaded hole **18** developing according to a screwing direction **Y1** transverse to said longitudinal development axis **X** of the low chainstay **16.**

The fixing bracket **12** is fixed to the fixing body **17** by means of at least one corresponding screw **80** whose shank **80b** is screwed to said corresponding fixing threaded hole **18** in a position external to said low chainstay **16,** or external to said rear fork **15** in an embodiment variant of the invention.

The phrase 'an external position' means a position that is on the external surface of the low chainstay **16** or of the rear fork **15,** and not in the internal tubular cavity of the low chainstay **16** or of the rear fork **15.**

The low chainstay **16** is to be intended as being a substantially tubular body.

In the first embodiment, and in general preferably, the fixing body **17** has two fixing threaded holes **18** and **19,** both developing according to a respective fixing direction **Y1** and **Y2** transverse to the longitudinal development axis **X** of the low chainstay **16.**

The fixing threaded holes **18** and **19** are arranged aligned along a same direction substantially parallel to the longitudinal development axis **X.**

In this first embodiment with two fixing threaded holes **18** and **19,** the fixing bracket **12** is fixed to the fixing body **17** by means of two corresponding screws **80** and **90.**

The screws **80** and **90** respectively comprise a head **80a** and **90a** and a threaded shank **80b** and **90b.**

The fixing body **17** comprises a load-bearing element **20** having a substantially 'C' shape, with a concavity **21** thereof facing towards the low chainstay **16,** or towards the rear fork **15** in an embodiment variant not illustrated.

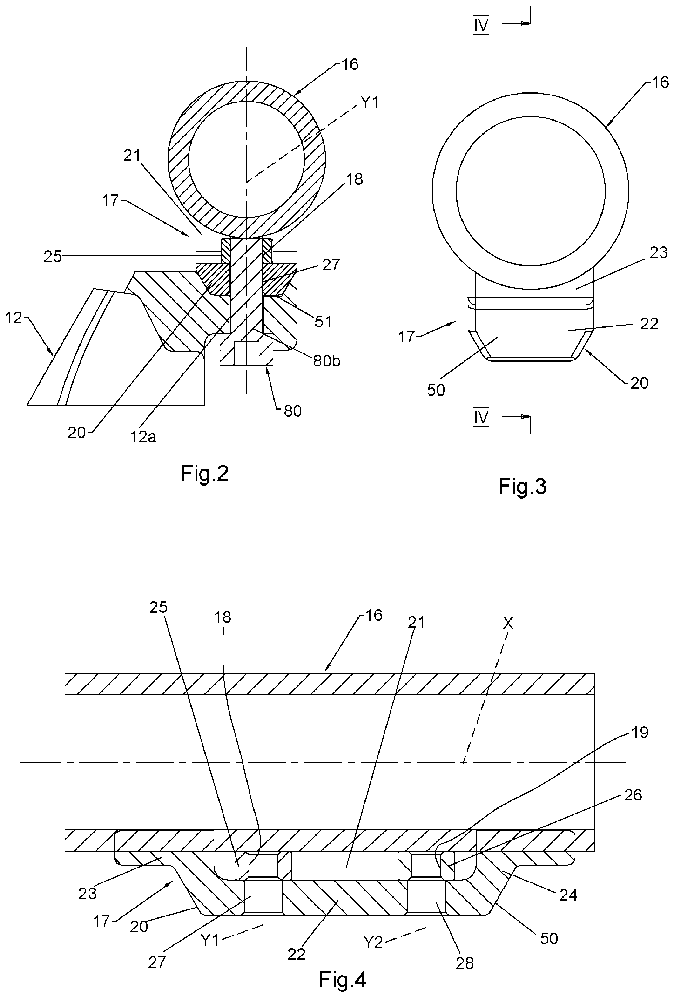

The load-bearing element **20,** as clearly visible in Figure 4, comprises a base portion **22,** a front portion **23** and a rear portion **24,** among which said concavity **21** is defined.

The front portion **23** and the rear portion **24** are fixed to either the low chainstay **16** or to the rear fork **15.**

The fixing body **17** is to be intended as fixed to the low chainstay **16,** or to the rear fork **15,** with fixing means to be intended as of known type.

For example, the load-bearing element **20** is fixed to the low chainstay **16,** or to the rear fork **15,** by welding.

The load-bearing element **20** is to be intended as being made of metallic material.

In an embodiment variant of the invention, not illustrated for simplicity's sake, the load-bearing element is integrated into the low chainstay or into the rear fork, i.e. the load-bearing element and the low chainstay form a single body, or the load-bearing element and the rear fork form a single body.

The front portion **23** of said load-bearing element **20** is to be intended as facing towards the box of the central movement **14** along a direction substantially parallel to the development axis **X** of said low chainstay **16,** while the rear portion **24** is facing in the opposite direction with respect to said front portion **23.**

The rear portion **24** is therefore facing towards the rear fork **15** if the load-bearing element **20** is fixed to the low chainstay **16.**

In particular, in said first embodiment of the device **10** according to the invention, the load-bearing element **20** is fixed below said low chainstay **16,** or said rear fork **15.**

In this first embodiment of the device **10** according to the invention, the fixing body **17** comprises:
- at least one through hole **27** defined on said base portion **22** in a substantially radial direction with respect to said longitudinal development axis **X;**
- a nut **25** defining a fixing threaded hole **18,** said nut **25** being positioned in said concavity **21** and being positioned coaxially with respect to said through hole **27.**

In the specific embodiment represented in Figures 2, 3 and 4, the fixing body **17** comprises:
- two through holes **27** and **28** defined on said base portion **22** in a substantially radial direction with respect to said longitudinal development axis **X;**
- two nuts **25** and **26** each defining a fixing threaded hole **18** and **19** respectively, said nuts **25** and **26** being positioned in said concavity **21** and being positioned coaxially with respect to the corresponding through hole **27** and **28.**

Each of the nuts **25** and **26** is free with respect to the load-bearing element **20.** Alternatively, one or both of the nuts **25** and **26** are fixed to the base portion **22** of the load-bearing element **20,** for example by welding or by gluing.

The fixing body **17** comprises a centring shaping **50** configured to couple with a counter-shaped recess **51** defined on said fixing bracket **12** of said cycle stay **11;** this counter-shaped recess **51** is visible in Figure 2.

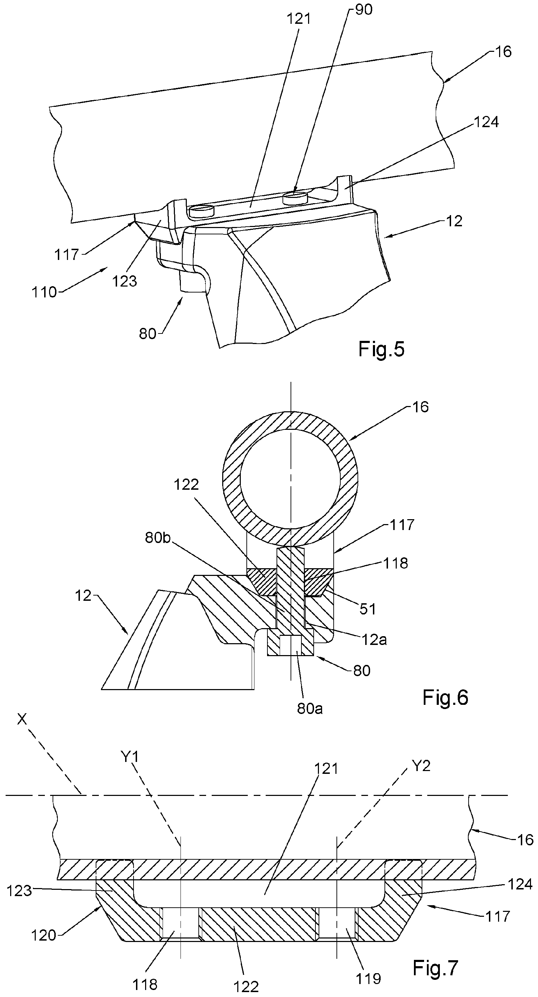

A second embodiment of a device for fixing a cycle stay to a low chainstay of a bicycle according to the invention is represented in Figures 5 to 7 and is indicated therein with the number **110.**

The device **110** comprises a fixing body **117** fixed externally to the low chainstay **16,** said fixing body **117** comprising at least one fixing threaded hole **118** developing according to a screwing direction **Y1** transverse to said longitudinal development axis **X** of the low chainstay **16.**

In such device **110** the at least one fixing threaded hole **118** is defined on said base portion **122.**

In particular, the load-bearing element **120,** as clearly visible in Figure 7, comprises a base portion **122,** a front portion **123** and a rear portion **124,** among which said concavity **121** is defined.

Said fixing body **117** comprises two fixing threaded holes **118** and **119** developing according to respective screwing directions **Y1** and **Y2** transverse to said longitudinal development axis **X** of the low chainstay **16.**

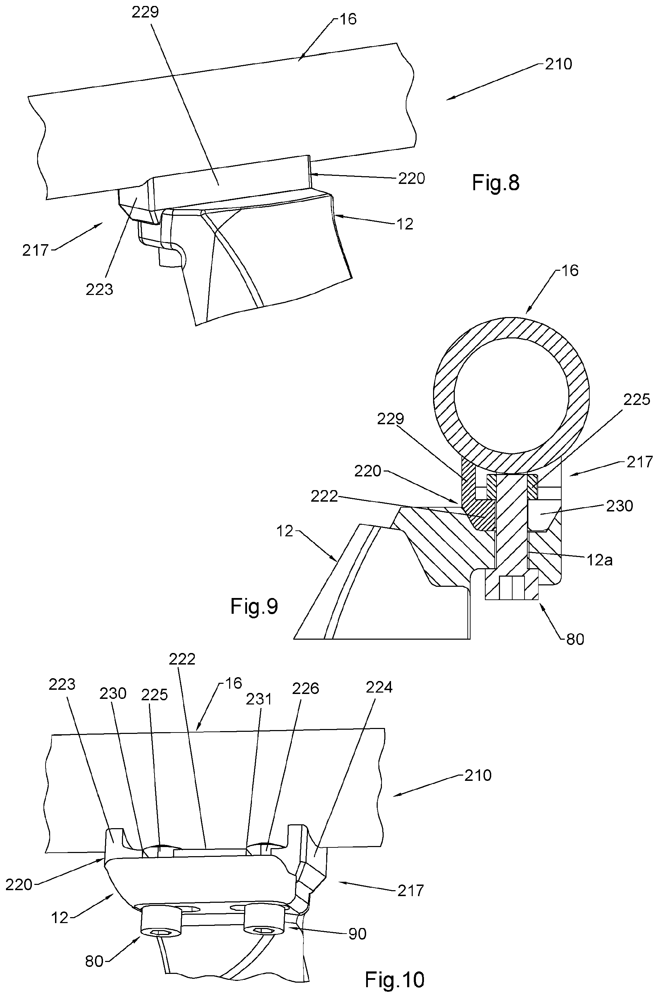

A third embodiment of a device for fixing a cycle stay to a low chainstay of a bicycle according to the invention is represented in Figures 8 to 11 and is indicated therein with the number **210.**

The device **210** comprises a fixing body **217** fixed externally to the low chainstay **16,** said fixing body **217** comprising at least one fixing threaded hole **218** developing according to a screwing direction **Y1** transverse to said longitudinal development axis **X** of the low chainstay **16.**

The fixing body **217** comprises a load-bearing element **220** having a substantially 'C' shape, with a concavity **221** thereof facing towards the low chainstay **16,** or towards the rear fork **15** in an embodiment variant not illustrated.

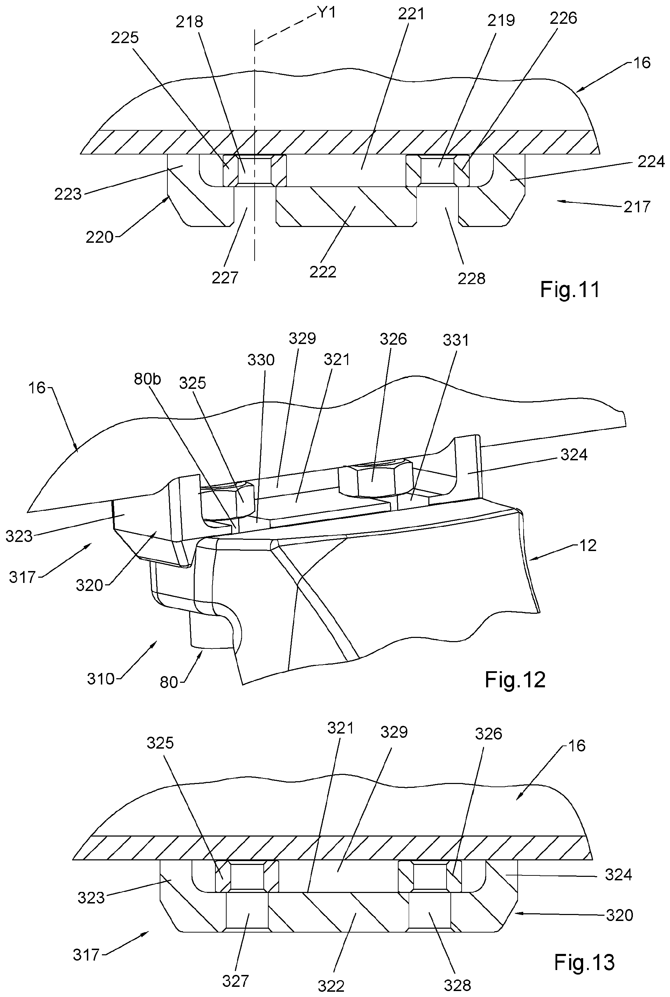

The load-bearing element **220,** as clearly visible in Figure 11, comprises a base portion **222,** a front portion **223** and a rear portion **224,** among which said concavity **221** is defined.

In this third embodiment of the device **210** according to the invention, the fixing body **217** comprises:
- at least one through hole **227** defined on said base portion **222** in a substantially radial direction with respect to said longitudinal development axis **X;**
- a nut **225** defining a fixing threaded hole **218,** said nut **225** being positioned in said concavity **221** and being positioned coaxially with respect to said through hole **227.**

In the specific embodiment represented in Figures 8, 9, 10 and 11, the fixing body **217** comprises:
- two through holes **227** and **228** defined on said base portion **222** in a substantially radial direction with respect to said longitudinal development axis **X;**
- two nuts **225** and **226** each defining a fixing threaded hole **218** and **219** respectively, said nuts **225** and **226** being positioned in said concavity **221** and being positioned coaxially with respect to the corresponding through hole **227** and **228.**

The device **210** according to the invention, in said third embodiment, is characterized in that said load-bearing element **220** comprises an external protective wall **229,** clearly visible in Figures 8 and 9, developing between the front portion **223** and the rear portion **224,** facing the outside of a bicycle of which the device is part.

This external protective wall **229** protects the nuts **225** and **226** from dirt and at the same time prevents the nuts **225** and **226** from being seen and makes the device **210** itself more aesthetically pleasing.

The device **210** according to the invention is also characterized in that the base portion **222** comprises a side opening **230** defined at said at least one through hole **227,** configured to allow the extraction of a shank of a screw from said through hole **227** according to an extraction direction transverse to the axis of said same through hole **227.**

In the present embodiment, the base portion **222** comprises a side opening **230** and **231** defined at each of the two through holes **227** and **228,** said side openings **230** and **231** being configured to allow the extraction of a shank of a screw **80** and **90** from the respective through hole **227** and **228** according to an extraction direction transverse to the axis of said same through hole **227** and **228.**

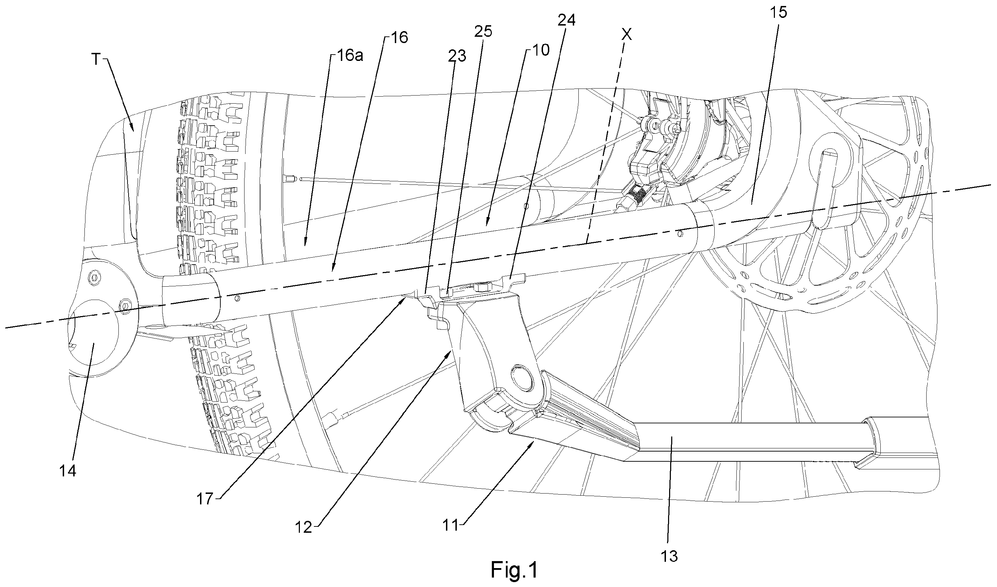

These side openings **230** and **231** are facing the inside of the frame **T** of which the low chainstay **16** is part, i.e. the side openings **230** and **231** are facing towards the side face **16a** of said low chainstay **16** of the frame **T,** where said side face **16a** of the low chainstay **16** is visible by way of example in Figure 1.

The side openings **230** and **231** therefore have a width substantially corresponding to the diameter of the through hole **227** and **228** with which they are respectively connected.

The side openings **230** and **231** each develop from the respective through hole **227** and **228** up to the internal side face of the base portion **222** of the load-bearing element **220.**

A fourth embodiment of a device for fixing a cycle stay to a low chainstay of a bicycle according to the invention is represented in Figures 12 to 14 and is indicated therein with the number **310.**

The device **310** comprises a fixing body **317** fixed externally to the low chainstay **16,** said fixing body **317** comprising at least one fixing threaded hole **318** developing according to a screwing direction **Y1** transverse to said longitudinal development axis **X** of the low chainstay **16.**

The fixing body **317** comprises a load-bearing element **320** having a substantially 'C' shape, with a concavity **321** thereof facing towards the low chainstay **16,** or towards the rear fork **15** in an embodiment variant not illustrated.

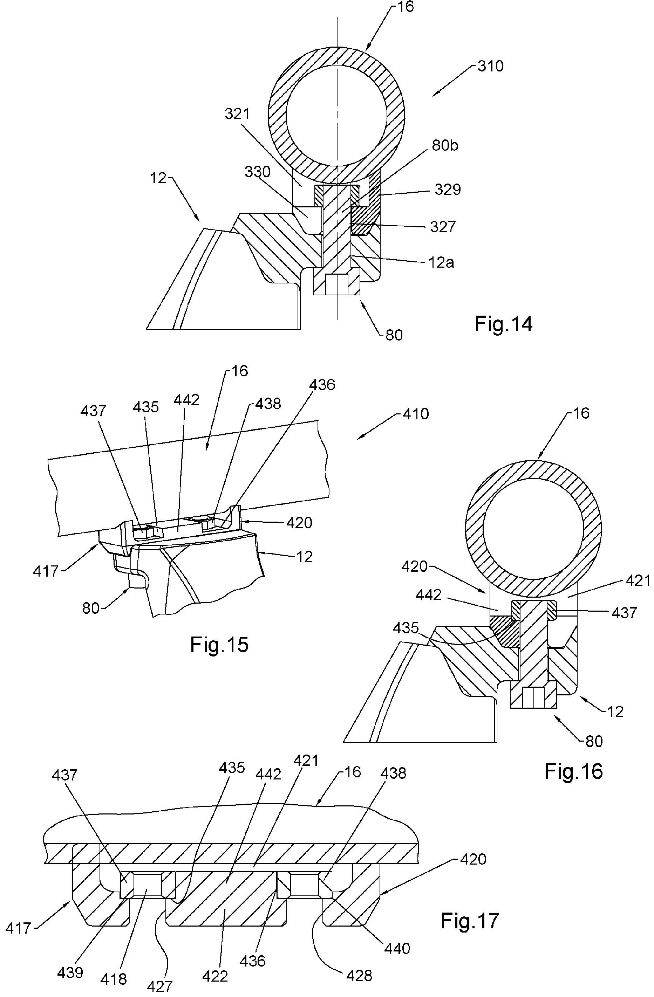

The device **310** according to the invention, in said fourth embodiment, is characterized in that said load-bearing element **320** comprises an internal protective wall **329,** clearly visible in Figure 14, developing between the front portion **323** and the rear portion **324,** facing the inside of a bicycle of which the device is part.

This internal protective wall **329** protects the nuts **325** and **326** from dirt thrown up by the wheels of the bicycle.

The device **310** according to the invention is also characterized in that the base portion **322** comprises a side opening **330** defined at said at least one through hole **327,** configured to allow the extraction of a shank **80b** of a screw **80** from said through hole **327** according to an extraction direction transverse to the axis of said same through hole **327.**

In the present embodiment, the base portion **322** comprises a side opening **330** and **331** defined at each of the two through holes **327** and **328,** said side openings **330** and **331** being configured to allow the extraction of a shank of a screw **80** and **90** from the respective through hole **327** and **328** according to an extraction direction transverse to the axis of said same through hole **327** and **328.**

Said side openings **330** and **331** are facing the outside of the frame **T** of which the low chainstay **16** is part, i.e. on the opposite side with respect to what is described above for the third embodiment of the device **210** according to the invention.

A fifth embodiment of a device for fixing a cycle stay to a low chainstay of a bicycle according to the invention is represented in Figures 15 to 17 and is indicated therein with the number **410.**

The device **410** comprises a fixing body **417** fixed externally to the low chainstay **16,** said fixing body **417** comprising at least one fixing threaded hole **418** developing according to a screwing direction **Y1** transverse to said longitudinal development axis **X** of the low chainstay **16,** similar to what is described above for the other embodiments of the invention.

The fixing body **417** comprises a load-bearing element **420** having a substantially 'C' shape, with a concavity **421** thereof facing towards the low chainstay **16,** or towards the rear fork **15** in an embodiment variant not illustrated.

The device **410** according to the invention, in said fifth embodiment, is characterized in that said load-bearing element **420** comprises at least one anti-rotation seat **435** shaped to receive a nut **437** and prevent the rotation thereof in the step of screwing a corresponding screw **80** to said nut **437.**

In particular, the load-bearing element **420** comprises two anti-rotation seats **435** and **436** each of which is shaped to receive a corresponding nut **437** and **438.**

Still in particular, each anti-rotation seat **435** and **436** is defined by a respective recess **439** and **440** made in the base portion **422** at a respective through hole **427** and **428.**

Each recess **439** and **440** is shaped so that at least one face thereof meets a face of a corresponding nut **437** and **438** so as to prevent the rotation thereof.

The base portion **422** also comprises a central shoulder **442** configured such that a face of both nuts **437** and **438** rests thereon.

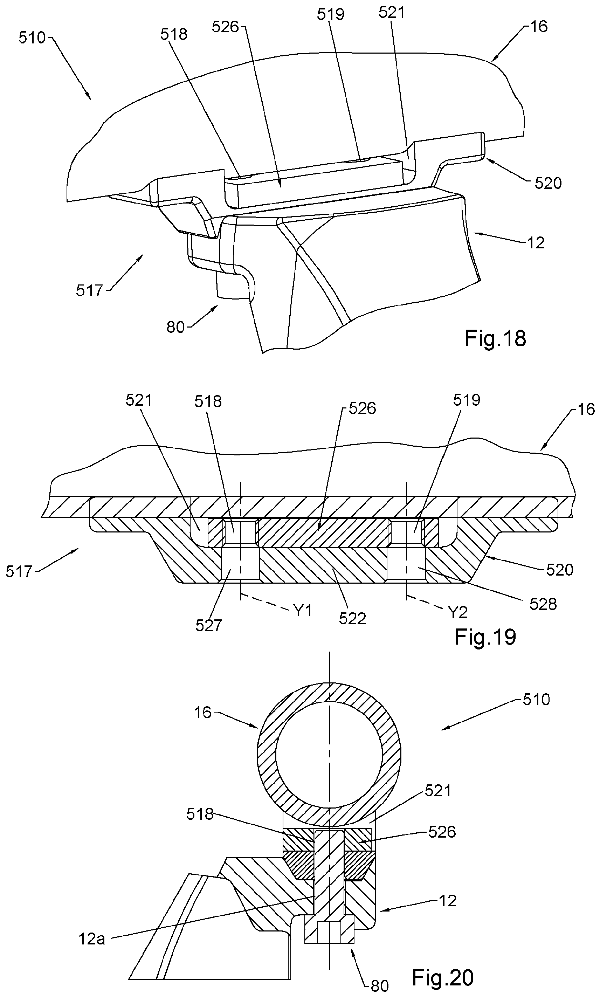

A sixth embodiment of a device for fixing a cycle stay to a low chainstay of a bicycle according to the invention is represented in Figures 18 to 20 and is indicated therein with the number **510.**

The device **510** comprises a fixing body **517** fixed externally to the low chainstay **16,** said fixing body **517** comprising at least one fixing threaded hole **518** developing according to a screwing direction **Y1** transverse to said longitudinal development axis X of the low chainstay **16.**

In particular, the fixing body **517** has two fixing threaded holes **518** and **519,** both developing according to a respective fixing direction **Y1** and **Y2** transverse to the longitudinal development axis **X** of the low chainstay **16.**

The fixing threaded holes **518** and **519** are arranged aligned along a same direction substantially parallel to the longitudinal development axis **X.**

The fixing body **517** comprises a load-bearing element **520** having a substantially 'C' shape, with a concavity **521** thereof facing towards the low chainstay **16,** or towards the rear fork **15** in an embodiment variant not illustrated.

The device **510** according to the invention, in said sixth embodiment, is characterized in that the fixing body **517** comprises:
- two through holes **527, 528** defined on said base portion **522** in a substantially radial direction with respect to the longitudinal development axis **X;**
- a plate **526** positioned in said concavity **521,** said plate **526** having two fixing threaded holes **518, 519** each coaxial to a respective through hole **527, 528.**

Said plate **526** is free with respect to the load-bearing element **530.**

Alternatively, the plate **526** is fixed to the base portion, for example by welding or gluing.

This plate **526** is made of metallic material.

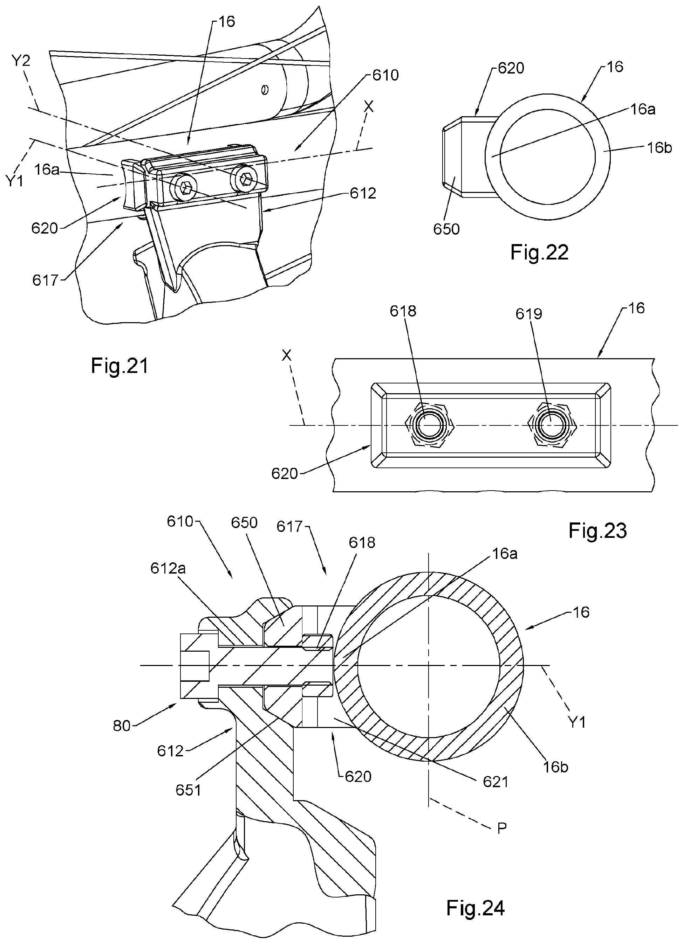

A seventh embodiment of a device for fixing a cycle stay to a low chainstay of a bicycle according to the invention is represented in Figures 21 to 24 and is indicated therein with the number **610.**

The device **610** comprises a fixing body **617** fixed externally to the low chainstay **16,** said fixing body **617** comprising at least one fixing threaded hole **618** developing according to a screwing direction **Y1** transverse to said longitudinal development axis **X** of the low chainstay **16.**

In particular, the fixing body **617** has two fixing threaded holes **618** and **619,** both developing according to a respective fixing direction **Y1** and **Y2** transverse to the longitudinal development axis **X** of the low chainstay **16.**

The fixing threaded holes **618** and **619** are arranged aligned along a same direction substantially parallel to the longitudinal development axis **X.**

The fixing body **617** comprises a load-bearing element **620** having a substantially 'C' shape, with a concavity **621** thereof facing towards the low chainstay **16,** or towards the rear fork **15** in an embodiment variant not illustrated.

The device **610** according to the invention, in said seventh embodiment, is characterized in that the fixing body **617** is fixed at a side face **16a or 16b** of said low chainstay **16** or of said rear fork **15.**

The fixing body **617** is to be intended as being able to be of the type described in the aforementioned embodiments **17, 117, 217, 317, 417** and **517.**

What is to be noted in this seventh embodiment of the invention is the peculiar position of the device **610,** and in particular of the fixing body **617.**

In the embodiment represented in Figures 21 to 24, the fixing body **617** is fixed to a side face **16a or 16b,** so that the fixing directions **Y1** and **Y2** are substantially orthogonal to a reference vertical plane **P** of the low chainstay **16;** said reference vertical plane **P** is schematized in Figure 24.

The fixing device **10, 110, 210, 310, 410, 510** is to be intended as being positionable in any position on the low chainstay **16,** or on the rear fork **15,** both with reference to the longitudinal development direction **X** of the low chainstay **16,** and with reference to the angular position with respect to the reference vertical plane **P.**

In such a peculiar seventh embodiment of the invention, the fixing body **617** comprises also a centring shaping **650** configured to couple with a counter-shaped recess **651** defined on said fixing bracket **612** of said cycle stay **11;** said counter-shaped recess **651** is visible in Figure 24.

The fixing bracket **612** develops mainly according to a plane substantially parallel to the reference vertical plane **P.**

Differently, in the embodiments from the first to the sixth one described above, the fixing bracket **12** develops mainly according to a plane substantially orthogonal to the reference vertical plane **P.**

The fixing bracket **12** and **612** comprises through holes **12a** and **612a** for the passage of the shanks of the screws **80** and **90.**

The low chainstay **16** can have through holes at the threaded holes **18, 19, 118, 119, 218, 219, 318, 319, 418, 419, 518, 519, 618, 619,** configured to allow a complete and therefore better screwing of the screws **80** and **90** to such threaded holes, preventing the tips of the screws **80** and **90** from pressing against the external surface of the same low chainstay **16,** with the risk of scoring such a surface.

In the embodiments from the first to the fifth one, the screws **80** and **90** are arranged substantially vertically with respect to a normal setup of use of the bicycle **B** of which said low chainstay **16** is part.

The screws are screwed into a corresponding fixing hole **18** and **19** with the screwing heads **80a** being each arranged below the fixing body **17.**

The threaded shanks **80b** of the screws **80** and **90** can be screwed as far as entering into the low chainstay **16** through the respective through holes, not illustrated for simplicity's sake.

The load-bearing element **20, 120, 220, 320, 420, 520, 620** consists of a body made of metallic material.

The centring shaping **50, 650** and the corresponding counter-shaped recess **51, 651** make it possible to optimise the progressive centring of the fixing bracket **12, 612** of the cycle stay when mounting the same cycle stay on the fixing body **17, 117, 217, 317, 417, 517, 617.**

In general, with regard to all the above-described embodiments of the device according to the invention, the different characteristics described above for each specific embodiment are to be intended as being combinable with each other where compatible.

Practically, it has been established that the invention achieves the intended task and objects.

In particular, the invention has developed a device capable of preventing a portion of a broken screw from remaining inside the low chainstay, or the rear fork, to which the cycle stay is fixed.

In addition, with the invention a device has been developed that, in case of breakage of a fixing screw, it makes it possible to easily and quickly replace it.

Still in particular, the invention has developed a device capable of reducing the encumbrance generated by the cycle stay.

Furthermore, with the invention a device has been developed that allows to set up a cycle stay in a less dangerous position for a user.

In addition, with the invention a device has been developed that makes the bicycle more aerodynamic.

Still, with the invention a device has been developed for fixing a cycle stay to a low chainstay of a bicycle of better aesthetic impact than what is known.

Thanks to such a device according to the invention, the cycle stay can also be attached so that the heads of the screws are either below or above the low chainstay, in any case in a position that is not dangerous for a user.

Thanks to the presence of centring shapings, there is an important recovery of the coupling plays between the cycle stay and the low chainstay of the bicycle.

The invention thus conceived is susceptible of numerous modifications and variations, all of which are within the scope of the inventive concept; moreover, all the details may be replaced by other technically equivalent elements.

In practice, the components and the materials used, so long as they are compatible with the specific use, as well as the contingent shapes and dimensions could be of any type according to requirements and the state of the art.

Where the characteristics and techniques mentioned in any claim are followed by reference marks, such reference marks are to be intended as affixed solely for the purpose of increasing the intelligibility of the claims and consequently such reference marks have no limiting effect on the interpretation of each element identified by way of example by such reference marks.

## Claims

1. Device (10) for fixing a cycle stay to a frame of a bicycle, comprising:
- a cycle stay (11) comprising a fixing bracket (12) and a rest rod (13), said rest rod (13) being pivoted to said fixing bracket (12);
- a box of the central movement (14) of a bicycle;
- a rear fork (15);
- a low chainstay (16) interposed between said box of the central movement (14) and said rear fork (15), said low chainstay (16) having a longitudinal development axis (X),
wherein said low chainstay (16) comprises a fixing body (17, 217, 317, 417, 517, 617) fixed externally to said low chainstay (16) or externally to said rear fork (15), said fixing body (17, 217, 317, 417, 517, 617) comprising:
- a load-bearing element (20, 220, 320, 420, 520, 620) having a substantially 'C' shape, with a concavity (21, 221, 321, 421, 521, 621) thereof facing towards said low chainstay (16) or towards said rear fork (15), said load-bearing element (20, 220, 320, 420, 520, 620) comprising a base portion (22, 222, 322, 422, 522, 622), a front portion (23, 223, 323) and a rear portion (24, 224, 324), among which said concavity (21, 221, 321, 421, 521, 621) is defined;
- two through holes (27, 28, 227, 228, 327, 328, 427, 428, 527, 528) defined on said base portion (22, 222, 322, 422, 522, 622) in a substantially radial direction with respect to said longitudinal development axis (X);
and **characterised in that** said fixing body (17, 217, 317, 417, 517, 617) further comprises:
- two nuts (25, 26, 225, 226, 325, 326, 437, 438) each defining a fixing threaded hole (18, 19, 218, 219, 318, 319, 418, 618, 619) respectively, said nuts (25, 26, 225, 226, 325, 326, 437, 438) being positioned in said concavity (21, 221, 321, 421, 621) and being positioned coaxially with respect to the corresponding through hole (27, 28, 227, 228, 327, 328, 427, 428);
or
- a plate (526) positioned in said concavity (521), said plate (526) having two fixing threaded holes (518, 519) coaxial to a respective through hole (527, 528),
said fixing threaded holes (18, 19, 218, 219, 318, 319, 418, 518, 519, 618, 619) being arranged aligned along a same direction substantially parallel to said longitudinal development axis (X), said fixing bracket (12) being fixed to said fixing body (17, 217, 317, 417, 517, 617) by means of two corresponding screws (80, 90) whose shanks (80b) are screwed to said corresponding fixing threaded holes (18, 19, 218, 219, 318, 319, 418, 518, 519, 618, 619) in a position external to said low chainstay (16) or external to said rear fork (15).

2. Device according to claim 1, **characterized in that** said load-bearing element (20, 220, 320, 420, 520, 620) is fixed below said low chainstay (16) or said rear fork (15).

3. Device according to one or more of the preceding claims,
**characterized in that** said load-bearing element (220) comprises an external protective wall (229) developing between said front portion (223) and said rear portion (224) and facing the outside of a bicycle of which the device is part.

4. Device according to one or more of the preceding claims,
**characterized in that** said base portion (222) comprises a side opening (230) defined at said at least one through hole (227), configured to allow the extraction of a shank of a screw from said through holes (227, 228) according to an extraction direction transverse to the axis of said same through holes (227, 228).

5. Device according to one or more of the preceding claims,
**characterized in that** said load-bearing element (420) comprises at least one anti-rotation seat (435) shaped to receive a nut (437) and prevent the rotation thereof in the step of screwing a corresponding screw (480) to said nut (437).

6. Device according to one or more of the preceding claims,
**characterized in that** said fixing body (617) is fixed at a side face (16a, 16b) of said low chainstay (16) or of said rear fork (15).

## Patentansprüche

1. Vorrichtung (10) zum Befestigen einer Fahrradstrebe an einem Rahmen eines Fahrrads, umfassend:
- eine Fahrradstrebe (11), die einen Befestigungsbügel (12) und eine Auflagestange (13) umfasst, wobei die besagte Auflagestange (13) am besagten Befestigungsbügel (12) angelenkt ist;
- einen Kasten der zentralen Bewegung (14) eines Fahrrads;
- eine hintere Gabel (15);
- eine untere Kettenstrebe (16), die zwischen dem besagten Kasten der zentralen Bewegung (14) und der besagten hinteren Gabel (15) eingefügt ist, wobei die besagte untere Kettenstrebe (16) eine Längserstreckungsachse (X) aufweist,
wobei die besagte untere Kettenstrebe (16) einen Befestigungskörper (17, 217, 317, 417, 517, 617) umfasst, der außen an der besagten unteren Kettenstrebe (16) oder außen an der besagten hinteren Gabel (15) befestigt ist, wobei der besagte Befestigungskörper (17, 217, 317, 417, 517, 617) Folgendes umfasst:
- ein lasttragendes Element (20, 220, 320, 420, 520, 620) mit einer im Wesentlichen "C"-förmigen Gestalt, wobei eine Konkavität (21, 221, 321, 421, 521, 621) davon der besagten unteren Kettenstrebe (16) oder der besagten hinteren Gabel (15) zugewandt ist, wobei das besagte lasttragende Element (20, 220, 320, 420, 520, 620) einen Basisabschnitt (22, 222, 322, 422, 522, 622), einen vorderen Abschnitt (23, 223, 323) und einen hinteren Abschnitt (24, 224, 324) umfasst, zwischen denen die besagte Konkavität (21, 221, 321, 421, 521, 621) definiert ist;
- zwei Durchgangsbohrungen (27, 28, 227, 228, 327, 328, 427, 428, 527, 528), die am besagten Basisabschnitt (22, 222, 322, 422, 522, 622) in einer im Wesentlichen radialen Richtung in Bezug auf die besagte Längserstreckungsachse (X) definiert sind;
und **dadurch gekennzeichnet, dass** der besagte Befestigungskörper (17, 217, 317, 417, 517, 617) ferner Folgendes umfasst:
- zwei Muttern (25, 26, 225, 226, 325, 326, 437, 438), die jeweils eine Befestigungsgewindebohrung (18, 19, 218, 219, 318, 319, 418, 618, 619) definieren, wobei die besagten Muttern (25, 26, 225, 226, 325, 326, 437, 438) in der besagten Konkavität (21, 221, 321, 421, 621) und koaxial in Bezug auf die entsprechende Durchgangsbohrung (27, 28, 227, 228, 327, 328, 427, 428) positioniert sind;
oder
- eine Platte (526), die in der besagten Konkavität (521) positioniert ist, wobei die besagte Platte (526) zwei Befestigungsgewindebohrungen (518, 519) aufweist, die koaxial zu einer jeweiligen Durchgangsbohrung (527, 528) sind,
wobei die besagten Befestigungsgewindebohrungen (18, 19, 218, 219, 318, 319, 418, 518, 519, 618, 619) entlang einer gleichen Richtung im Wesentlichen parallel zur besagten Längserstreckungsachse (X) ausgerichtet angeordnet sind, wobei der besagte Befestigungsbügel (12) am besagten Befestigungskörper (17, 217, 317, 417, 517, 617) mittels zweier entsprechender Schrauben (80, 90) befestigt ist, deren Schäfte (80b) an den besagten entsprechenden Befestigungsgewindebohrungen (18, 19, 218, 219, 318, 319, 418, 518, 519, 618, 619) in einer Position außen an der besagten unteren Kettenstrebe (16) oder außen an der besagten hinteren Gabel (15) verschraubt sind.

2. Vorrichtung nach Patentanspruch 1, **dadurch gekennzeichnet, dass** das besagte lasttragende Element (20, 220, 320, 420, 520, 620) unterhalb der besagten unteren Kettenstrebe (16) oder der besagten hinteren Gabel (15) befestigt ist.

3. Vorrichtung nach einem oder mehreren der vorhergehenden Patentansprüche, **dadurch gekennzeichnet, dass** das besagte lasttragende Element (220) eine äußere Schutzwand (229) umfasst, die sich zwischen dem besagten vorderen Abschnitt (223) und dem besagten hinteren Abschnitt (224) erstreckt und der Außenseite eines Fahrrads, zu dem die Vorrichtung gehört, zugewandt ist.

4. Vorrichtung nach einem oder mehreren der vorhergehenden Patentansprüche, **dadurch gekennzeichnet, dass** der besagte Basisabschnitt (222) eine Seitenöffnung (230) umfasst, die an der besagten mindestens einen Durchgangsbohrung (227) definiert ist, und konfiguriert ist, so dass sie die Entnahme eines Schafts einer Schraube aus den besagten Durchgangsbohrungen (227, 228) gemäß einer Entnahmerichtung quer zur Achse der besagten gleichen Durchgangsbohrungen (227, 228) ermöglicht.

5. Vorrichtung nach einem oder mehreren der vorhergehenden Patentansprüche, **dadurch gekennzeichnet, dass** das besagte lasttragende Element (420) mindestens einen Drehsicherungssitz (435) umfasst, der so geformt ist, dass er eine Mutter (437) aufnimmt und deren Drehung im Schritt des Verschraubens einer entsprechenden Schraube (480) an der besagten Mutter (437) verhindert.

6. Vorrichtung nach einem oder mehreren der vorhergehenden Patentansprüche, **dadurch gekennzeichnet, dass** der besagte Befestigungskörper (617) an einer Seitenfläche (16a, 16b) der besagten unteren Kettenstrebe (16) oder der besagten hinteren Gabel (15) befestigt ist.

## Revendications

1. Dispositif de fixation (10) d'un hauban de vélo sur le cadre d'un vélo, comprenant:
- un hauban de vélo (11) comprenant un étrier de fixation (12) et une tige d'appui (13), ladite tige d'appui (13) étant pivotée sur ledit étrier de fixation (12);
- une boîte du mouvement central (14) d'un vélo;
- une fourche arrière (15);
- un tube de base (16) interposé entre ladite boîte du mouvement central (14) et ladite fourche arrière (15), ledit tube de base (16) ayant un axe de développement longitudinal (X),
où ledit tube de base (16) comprend un corps de fixation (17, 217, 317, 417, 517, 617) fixé à l'extérieur dudit tube de base (16) ou à l'extérieur de ladite fourche arrière (15), ledit corps de fixation (17, 217, 317, 417, 517, 617) comprenant:
- un élément porteur (20, 220, 320, 420, 520, 620) ayant une forme sensiblement en "C", dont la concavité (21, 221, 321, 421, 521, 621) est orientée vers ledit tube de base (16) ou vers ladite fourche arrière (15), ledit élément porteur (20, 220, 320, 420, 520, 620) comprenant une partie de base (22, 222, 322, 422, 522, 622), une partie avant (23, 223, 323) et une partie arrière (24, 224, 324), parmi lesquelles est définie ladite concavité (21, 221, 321, 421, 521, 621);
- deux trous traversants (27, 28, 227, 228, 327, 328, 427, 428, 527, 528) définis sur ladite partie de base (22, 222, 322, 422, 522, 622) dans une direction sensiblement radiale par rapport audit axe de développement longitudinal (X);
et **caractérisé en ce que** ledit corps de fixation (17, 217, 317, 417, 517, 617) comprend en outre:
- deux écrous (25, 26, 225, 226, 325, 326, 437, 438) chacun définissant un trou fileté de fixation (18, 19, 218, 219, 318, 319, 418, 618, 619) respectivement, lesdits écrous (25, 26, 225, 226, 325, 326, 437, 438) étant positionnés dans ladite concavité (21, 221, 321, 421, 621) et étant positionnés coaxialement par rapport au trou traversant correspondant (27, 28, 227, 228, 327, 328, 427, 428);
ou
- une plaque (526) positionnée dans ladite concavité (521), ladite plaque (526) ayant deux trous filetés de fixation (518, 519) coaxiaux à un trou traversant correspondant (527, 528),
lesdits trous filetés de fixation (18, 19, 218, 219, 318, 319, 418, 518, 519, 618, 619) étant alignés le long d'une même direction sensiblement parallèle audit axe de développement longitudinal (X), ledit étrier de fixation (12) étant fixée audit corps de fixation (17, 217, 317, 417, 517, 617) au moyen de deux vis correspondantes (80, 90) dont les tiges (80b) sont vissées dans lesdits trous filetés de fixation correspondants (18, 19, 218, 219, 318, 319, 418, 518, 519, 618, 619) dans une position extérieure audit tube de base (16) ou extérieure à ladite fourche arrière (15).

2. Dispositif selon la revendication 1, **caractérisé en ce que** ledit élément porteur (20, 220, 320, 420, 520, 620) est fixé sous ledit tube de base (16) ou ladite fourche arrière (15).

3. Dispositif selon l'une ou plusieurs des revendications précédentes,
**caractérisé en ce que** ledit élément porteur (220) comprend une paroi de protection extérieure (229) se développant entre ladite partie avant (223) et ladite partie arrière (224) et tournée vers l'extérieur d'un vélo dont le dispositif fait partie.

4. Dispositif selon l'une ou plusieurs des revendications précédentes,
**caractérisé en ce que** ladite partie de base (222) comprend une ouverture latérale (230) définie à hauteur dudit au moins un trou traversant (227), configurée pour permettre l'extraction d'une tige d'une vis desdits trous traversants (227, 228) selon une direction d'extraction transversale à l'axe desdits mêmes trous traversants (227, 228).

5. Dispositif selon l'une ou plusieurs des revendications précédentes,
**caractérisé en ce que** ledit élément porteur (420) comprend au moins un siège anti-rotation (435) conformé pour recevoir un écrou (437) et pour empêcher la rotation de celui-ci lors de la phase de vissage d'une vis correspondante (480) sur ledit écrou (437).

6. Dispositif selon l'une ou plusieurs des revendications précédentes,
**caractérisé en ce que** ledit corps de fixation (617) est fixé sur une face latérale (16a, 16b) dudit tube de base (16) ou de ladite fourche arrière (15).
